(19)

Europäisches
Patentamt
European
Patent Office
Office européen
des brevets

(11) **EP 3 896 623 A1**

(12) **EUROPEAN PATENT APPLICATION**

(43) Date of publication:
**20.10.2021 Bulletin 2021/42**

(51) Int Cl.:
**G06N 10/00** (2019.01)

(21) Application number: **21162760.9**

(22) Date of filing: **16.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.04.2020 JP 2020072671**

(71) Applicant: **Hitachi, Ltd.
Tokyo 100-8280 (JP)**

(72) Inventors:
• **KANNO, Yusuke
Chiyoda-ku,, Tokyo 100-8280 (JP)**
• **MIZUNO, Hiroyuki
Chiyoda-ku,, Tokyo 100-8280 (JP)**
• **TSUCHIYA, Ryuta
Chiyoda-ku,, Tokyo 100-8280 (JP)**
• **LEE, Noriyuki
Chiyoda-ku,, Tokyo 100-8280 (JP)**
• **SHINKAI, Gou
Chiyoda-ku,, Tokyo 100-8280 (JP)**
• **TOMARU, Tatsuya
Chiyoda-ku,, Tokyo 100-8280 (JP)**

(74) Representative: **Strehl Schübel-Hopf & Partner
Maximilianstrasse 54
80538 München (DE)**

(54) **SILICON ELECTRON SPIN TYPE MASSIVELY PARALLEL QUANTUM COMPUTER**

(57)     A quantum computer includes: a module including quantum computation units having a plurality of qubits and selection units that cause the quantum computation units to perform parallel computations; and a read unit that acquires computation results of the quantum computation units of a plurality of modules and performs statistical averaging on the plurality of acquired computation results.

FIG. 1 3

**Description**

BACKGROUND OF THE INVENTION

1. Field of the Invention

The present invention relates to the configuration of a silicon electron spin type quantum computer and a method for realizing a quantum computer including other types of quantum computers, such as a superconducting type quantum computer.

2. Description of the Related Art

The development of quantum computers, especially gate-type quantum computers, is accelerating worldwide. Currently, the mainstream type is the superconducting type, and IBM and Google have put into practical use a quantum computer of about 50 Qubits. In addition, as one indicator of the supremacy of quantum computers, Google showed quantum transcendence in 2019 (Frank Arute et al., "Quantum supremacy using a programmable superconducting processor," Nature, Vol. 574, pp. 505-510, No. 24 OCTOBER 2019), and expectations for quantum computers are increasing.

There are some issues to be solved in order to realize a quantum computer. Among these issues, explanation will be given focusing on high integration, mounting limit, low fidelity of qubits, and influence of noise.

(1) Issue of high integration:
Currently, the mainstream gate type quantum computer is based on a method in which qubits are superconducting transmon qubits or the like, and the size of one qubit is as large as about 100 um sq. With such a large qubit, there is a limit to the high integration of qubits.
(2) Issue of mounting limit:
Superconducting or electron spin-based quantum computers require quantum computation at the extremely low temperature in order to eliminate the influence of noise. In order to realize this extremely low temperature, a dilution refrigerator is required, and inevitably there are large physical restrictions on a part where qubits are integrated. In particular, in order to integrate large-scale qubits, there is a problem that the number of control signals increases. If the number of control signals increases, the cooling capacity decreases, which makes it difficult to build an environment to maintain the extremely low temperature.
(3) Low fidelity of qubits:
Since the fidelity of qubits (computation accuracy) is low, multi-stage quantum computations are difficult.
(4) Influence of noise:
Qubits that perform quantum computations are extremely vulnerable to disturbances from the outside. The influence of the electromagnetic field from the outside or noise, such as vibration, causes the fidelity of quantum computation to decrease.

SUMMARY OF THE INVENTION

It is an object of the invention to provide a quantum computer capable of acquiring highly accurate quantum computation results at high speed and with high efficiency while using low fidelity qubits.

In order to solve the aforementioned problems, a quantum computer according to an aspect of the of the invention includes: a module including quantum computation units having a plurality of qubits and a selection unit that causes the quantum computation units to perform parallel computations; and a read unit that acquires computation results of the quantum computation units of a plurality of the modules and performs statistical averaging on the plurality of acquired computation results.

According to the invention, it is possible to obtain highly accurate quantum computation results at high speed and with high efficiency while using low fidelity qubits. In addition, there is an effect that it is possible to improve the accuracy of the computation result by computation of the number of quantum logic stages according to fidelity realized even in a noisy environment and it is possible to reduce the computation time by performing multiple computations at once.

In particular, in the case of a method of performing simultaneous computations using a plurality of quantum computation blocks at the same time, potential control for SPIN control and high frequency application can be shared. Therefore, there is an effect that it is possible to reduce the size of the control circuit and improve the efficiency of the control sequence.

BRIEF DESCRIPTION OF THE DRAWINGS

Fig. 1 is a diagram showing an example of a qubit subarray module;
Fig. 2 is a diagram showing an example of a qubit subarray;
Fig. 3 is an explanatory diagram of MOSFETs forming a qubit subarray;
Fig. 4 is a diagram showing an example of a qubit subarray including 16 qubits;
Fig. 5 is a diagram showing an initialization operation of a qubit subarray;
Fig. 6 is a diagram showing an example of an operation waveform during qubit computation;
Fig. 7 is a diagram showing an example of an operation waveform during qubit computation;
Fig. 8 is a diagram showing an example of a qubit subarray including 128 qubits;
Fig. 9A is an example of a selection circuit that selects qubits in a qubit subarray in the X direction;
Fig. 9B is an example of a selection circuit that selects qubits in a qubit subarray in the X direction;
Fig. 9C is an example of a selection circuit that selects qubits in a qubit subarray in the Y direction;
Fig. 9D is an example of a selection circuit that selects qubits in a qubit subarray in the Y direction;
Fig. 10 is a diagram showing an example of a read circuit of a qubit subarray;
Fig. 11 is a diagram showing symbols of a MOSFET for a qubit read circuit and an operation concept;
Fig. 12 is a diagram showing an example of an operation waveform of a qubit read circuit;
Fig. 13 is a diagram showing an example of a parallel computation module (QBOM) in which eight qubit subarray modules are integrated;
Fig. 14 is a diagram showing an example of a large qubit module (QBLM) in which a plurality of qubit subarray 8-unit modules QBOM are mounted;
Fig. 15 is a diagram showing an example of a large qubit module (QBLM) in which a plurality of qubit subarray 8-unit modules QBOM are mounted;
Fig. 16 shows an example in which a plurality of QBLMs are mounted, and is a diagram showing an example in which 2048 QBSAs are integrated by mounting QBLM#0 to QBLM#7; and
Fig. 17 is a diagram showing the overall structure of a quantum computer.

DETAILED DESCRIPTION OF THE PREFERRED EMBODIMENTS

Hereinafter, an embodiment of the invention will be described with reference to the diagrams. However, the invention should not be construed as being limited to the description of the embodiment below. It is easily understood by those skilled in the art that the specific configuration can be changed without departing from the idea or the spirit of the invention.
In the configuration of the invention described below, the same portions or portions having the same functions are denoted by the same reference numerals in different diagrams, and repeated descriptions thereof may be omitted.
In the embodiment, when there are a plurality of components that can be regarded as equivalent, the same symbol or number may be distinguished by adding subscripts. However, if there is no particular need to distinguish between the components, the subscripts may be omitted.
The notations such as "first", "second", and "third" in this specification and the like are attached to identify the components, and do not necessarily limit the number or the order. In addition, numbers for identifying components are used for each context, and numbers used in one context do not always indicate the same configuration in other contexts. In addition, this does not prevent a component identified by a certain number from having the function of a component identified by another number.
The position, size, shape, range, and the like of each configuration shown in the diagrams and the like may not represent the actual position, size, shape, range, and the like in order to facilitate understanding of the invention. Therefore, the invention is not necessarily limited to the position, size, shape, range, and the like disclosed in the diagrams and the like.

<Issues>

(1) Issue of high integration:
Currently, the mainstream gate type quantum computer is based on a method in which qubits are superconducting transmon qubits or the like, and the size of one qubit is as large as about 100 um sq. With such a large qubit, there is a limit to the high integration of qubits.

(2) Issue of mounting limit:

Superconducting or electron spin-based quantum computers require quantum computation at the extremely low temperature in order to eliminate the influence of noise. In order to realize this extremely low temperature, a dilution refrigerator is required, and inevitably there are large physical restrictions on the part where qubits are integrated. In particular, in order to integrate large-scale qubits, there is a problem that the number of control signals increases. If the number of control signals increases, the cooling capacity decreases, which makes it difficult to build an environment to maintain the extremely low temperature.

(3) Low fidelity of qubits:

Since the fidelity of qubits (computation accuracy) is low, multi-stage quantum computations are difficult.

(4) Influence of noise:

Qubits to perform quantum computations are extremely vulnerable to disturbances from the outside. The influence of the electromagnetic field from the outside or noise, such as vibration, causes the fidelity of quantum computation to decrease.

<Overview>

In order to solve the aforementioned problem (1), it is effective to realize highly integration by using a method of operating the electron spin captured in the quantum dot of the Si semiconductor as a qubit. When the semiconductor electron spin is used as a qubit, it is possible to create a qubit at 100 nm sq., so that it is possible to greatly reduce the size to $1/10^6$ compared with the superconducting type.

In addition, in order to solve the aforementioned problem (2), as in the case of high integration of a semiconductor memory, qubits to be computed are arranged on an array and addressing is performed. On the other hand, by limiting the result of the quantum computation so as to perform reading from some qubits, the quality of the read circuit is improved and noise resistance is improved. In this manner, even when the number of qubits is significantly increased, it is possible to avoid an explosive increase in the number of signals connected with a classical computer or an experimental apparatus installed at room temperature.

In addition, in order to solve the aforementioned problems (3) and (4), the number of quantum computation stages is determined so that the result of the quantum computation has a meaningful value even with low fidelity, and a quantum algorithm that fits in the number of quantum stages is calculated. In addition, in the quantum algorithm, the computation result is statistical. However, since the influence of low fidelity including the influence of noise appears, if the number of quantum computation stages increases, the quantum computation result is covered with noise.

However, it is possible to increase the reliability of the computation result of the quantum computation by performing the same quantum computation many times and acquiring the average classically. In particular, using the ergodic hypothesis, the statistical average of quantum computation results in a plurality of different quantum circuits having the same structure, not in the same quantum circuit, is taken. Quantum computation blocks for performing quantum computations can be manufactured with small variations by using fine semiconductor manufacturing technology. In addition, by providing a plurality of connection structures of qubits configuring the quantum computation block as exactly the same structure as other quantum computation blocks, it is designed so that the variation between the quantum computation blocks can be suppressed and the ergodic hypothesis can be used well. In addition, the quantum computation algorithm is designed so that the granularity at which quantum computations are performed is kept small and the number of logic stages of the quantum computations is small.

Taking advantage of the fact that the computation results of the respective quantum computation blocks are almost the same according to the ergodic hypothesis, the performance of quantum computation can be improved by performing many identical computations in parallel and taking the classical ensemble average of the quantum computation results. At this time, since the necessary computations for taking the classical ensemble average can be performed in parallel by a large number of parallel computations, the computation speed can be increased.

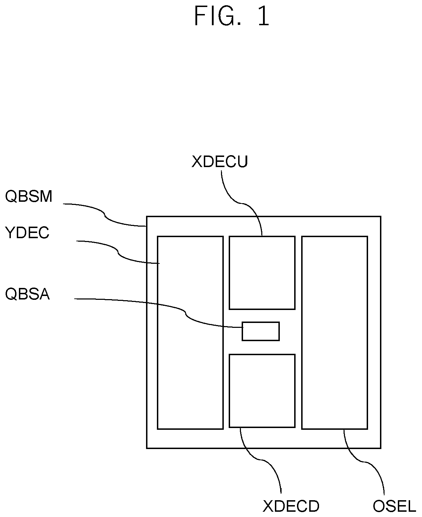

Fig. 1 is an example showing the integration of qubits to realize a quantum computer according to the present embodiment. Here, a qubit subarray (QBSA) integrates a plurality of qubits (QB) to form a quantum computation unit. A qubit subarray module (QBSM) includes the qubit subarray (QBSA). The qubit subarray module (QBSM) includes the qubit subarray (QBSA), an X selection circuit (XDECU, XDECD) that performs selection in the X direction of the qubit subarray, a Y selection circuit (YDEC) that performs selection in the Y direction of the qubit subarray, and an output selection circuit (OSEL).

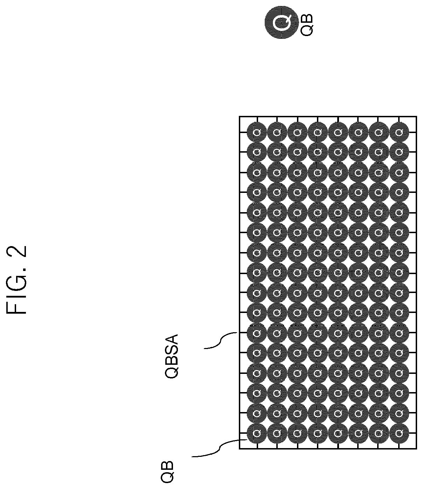

Fig. 2 shows an example of the qubit subarray (QBSA). The silicon type qubit has a small qubit size and is one of the methods suitable for high integration. In this example, an example of 128 qubits in which 16 qubits are integrated in the X direction (horizontal direction in Fig. 2) and 8 qubits are integrated in the Y direction (vertical direction in Fig. 2) is shown. The present embodiment is basically not limited to this configuration, but will be described below with this configuration in consideration of the ease of explanation.

In Fig. 2, circled Q symbols represent qubits. In general, in the computation of a quantum computer, it is not necessary to observe all the qubits used in the computation, only the qubits that display the answer need to be observed last. For this reason, this method is characterized in that only a part of the qubit array is read out. In this manner, it is possible to easily align the qubits on the array.

In the qubit read circuit, since the qubit information is spin information of one electron, it is technically difficult to accurately observe the information. As a method for reading out a silicon electron spin type qubit, a physical quantity is measured according to the spin direction of the electron as a qubit.

Currently known methods include a method of observing the spin direction of the electron by inputting a high frequency signal to the electron and measuring the reflected signal. In addition, there is also a measurement means that uses the fact that the current amplification factor of the single electron transistor changes depending on whether or not electrons can enter the single electron transistor for measurement according to the spin direction of the electron.

The silicon electron spin type qubit reading methods known so far include: a method of applying a high frequency to the qubit and detecting the difference in the frequency of the reflected electromagnetic wave depending on the spin direction of the electron of the qubit; and a method of reading out the number of electrons using a single electron transistor by using the fact that, in a state in which one electron with the spin direction aligned in one direction is set in the quantum dot of the detection MOSFET as an initial state, the electron cannot move due to the Pauli exclusion principle if the spin of the qubit is the same as the direction of the spin set in the detection MOSFET, and two electrons enter in the case of antiparallel.

In either method, the read circuit becomes large compared with the qubit. In addition, since control becomes complicated, limiting the qubits to be read greatly contributes to high integration.

In the present embodiment, even if the qubit read circuit becomes slightly larger by limiting the qubits to be read, there is an effect that the penalty of the mounting area can be reduced when a large number of qubits are integrated on the semiconductor chip. Therefore, a large number of qubits can be integrated in a limited area.

A qubit to which such a read means is applied is applied only to the rightmost qubit in the configuration shown in Fig. 2, for example. The following description will be focused on a method capable of reading out the information of the qubit string on one side of the qubit subarray.

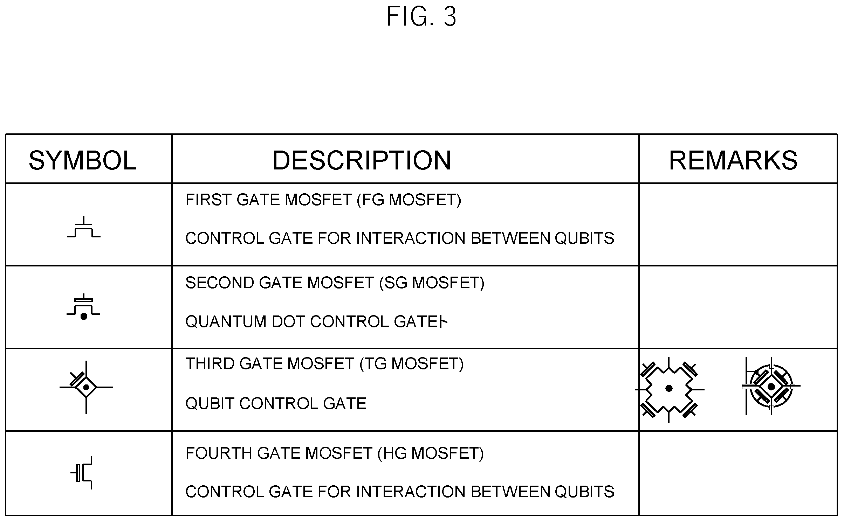

Hereinafter, the structure of quantum dots configuring a qubit will be described. Fig. 3 is a symbol of a MOSFET introduced to explain a qubit array configuring a quantum dot. Here, as an example, an example in which a MOSFET is manufactured from four layers of polysilicon is shown. In this table, a MOSFET formed at a first gate (FG), a MOSFET formed at a second gate (SG), a MOSFET formed at a third gate (TG), and a MOSFET formed at a fourth gate (HG) are shown.

In this MOSFET manufacturing method, first, the first gate (FG) is formed by lithography processing, and then a portion between the FGs is etched back to form the second gate by the self-alignment method. Through these processes, a MOSFET in which diffusion layer connection has been made in the X direction is formed.

Here, the MOSFET formed at the first gate (FG) is used as a gate to control the isolation between the quantum dots, and the MOSFET formed at the second gate (SG) is used as a MOSFET formed by the quantum dots. The MOSFET formed at the first gate (FG) and the MOSFET formed at the second gate (SG) have a channel structure in the horizontal direction in Fig. 3.

In addition, in order to make a connection between quantum dots in the vertical direction, the MOSFET formed at the third gate (TG) is used. In this MOSFET, a diffusion layer is formed on the cross-shaped intersection in the horizontal and vertical directions. Therefore, channels are formed in the horizontal and vertical directions in Fig. 3. Since the symbol of this MOSFET is configured such that connections in the X and Y directions can be made, the gate electrode is the same in MOSFETs in which connections in four directions can originally be made. However, since it is effective herein to represent a qubit array with a single symbol, this is newly described as a MOSFET in which connections in four directions can be made.

The MOSFET formed at the fourth gate (HG) has a role of separating quantum dots formed by TG by connection in the Y direction. The MOSFET formed at the fourth gate (HG) has a channel structure in the vertical direction in Fig. 3.

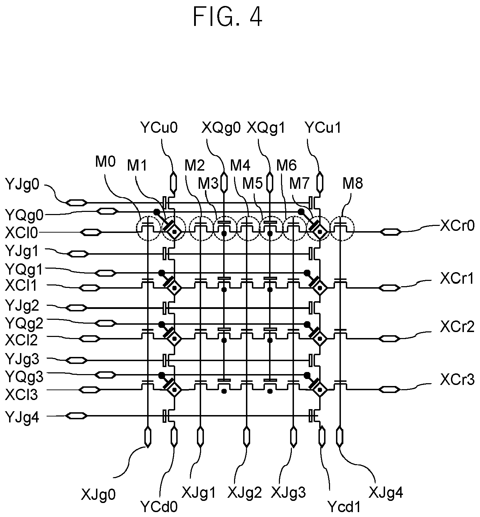

Fig. 4 is an example in which the structure of the qubit array is described using the symbols of Fig. 3. Here, in order to explain the main points, a small array is used. A MOSFET for controlling the separation of quantum dots is formed by FG, and signal lines (XJg0, XJg1, XJg2, XJg3, and XJg4) are connected to the gate. A MOSFET for creating quantum dots is formed by SG, and signal lines (XQg0 and XQg1) are connected to the gate. A MOSFET in which capable of interacting with quantum dots in the X and Y directions is formed by TG, and its gate is connected to signal lines (YQg0, YQg1, YQg2, and YQg3). A MOSFET for controlling the interaction between quantum dots, which controls the interaction between quantum dots in the Y direction, is formed by HG, and signal lines (YJg0, YJg1, YJg2, and YJg3) are connected to the gate.

Diffusion layers in the X direction are signal lines (XCl0, XCl1, XCl2, XCl3, XCr0, XCr1, XCr2, and XCr3), and the respective MOSFETs formed by FG, SG, and TG are connected by the diffusion layers in the horizontal direction.

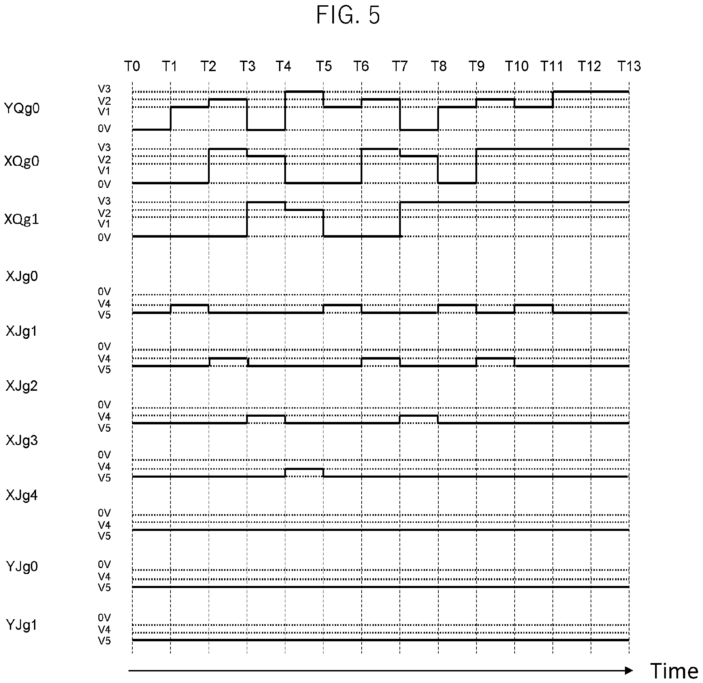

Diffusion layers in the Y direction are signal lines (YCu0, YCu1, YCu2, YCu3, YCd0, YCd1, YCd2, and YCd3), and the respective MOSFETs formed by TG and HG are connected by the diffusion layers in the vertical direction. The control signals XQg, XJg, YQg, and YJg of the gates are not connected to each other, but are connected only to the gate electrodes. The operations of M0 to M8 described in Fig. 4 will be described with reference to the operation waveform diagram shown in Fig. 5.

Fig. 5 is an operation waveform diagram of a method for controlling quantum dots integrated in the qubit array shown in Fig. 4. The operations of M0 to M8 in Fig. 4 will be described with reference to Fig. 5. In Fig. 5, the horizontal axis indicates time, and the vertical axis indicates the voltage levels of each terminal (YQg0, XQg0, XQg1, XJg0, XJg1, XJg2, XJg3, XJg4, YJg0, and YJg1). In Fig. 5, three levels of positive voltage levels (V1, V2, and V3; V1 > V2 > V3) and two levels of negative voltage levels (V4 and V5; V4 > V5) are shown.

Time T0 is an initial state, YQg0, XQg0, and XQg1 are fixed to 0 V, and XJg0, XJg1, XJg2, XJg3, XJg4, YJg0, and YJg1 are fixed to the V5 level. From this state, first, the initialization operation of each qubit will be described.

The electron reservoir is connected to the array through the left X-direction connection terminal XCl0. By controlling M0 and M2, an operation of moving one electron from the reservoir to the quantum dot provided in the channel of M2 is performed. First, when computing qubits in a quantum computer, using the so-called Zeeman splitting effect that applies a static magnetic field to the ground state of an electron to unwind the double degenerate state and form two levels, the upspin state is changed to a lower state and the downspin state is changed to a higher state.

In order to change the upspin state to the downspin state, transition is made by applying energy corresponding to the difference in energy levels using electromagnetic waves. Here, by setting each qubit so as to generate an inherent energy difference, spin control becomes possible by applying an electromagnetic wave to an arbitrary qubit. Bringing about this unique energy difference can be realized by using a minute magnet or forming a gradient magnetic field by applying a current.

Incidentally, as the initialization, after adjusting the magnetic field from the outside to the state in which the ground state of the electron is degenerated by the inherent energy difference in each qubit in this manner, the initialization is started by storing the electrons one by one in the same direction in the lower energy state of each qubit. In Fig. 4, since the electron reservoir is provided on the left side, the work of taking out the electrons one by one from the reservoir and storing the electrons in each desired quantum dot is performed. At this time, the electrons are stored in the dots on the left side in order from the quantum dots on the right side.

First, the electrons are stored in the quantum dots of M7. In this case, however, the electrons move from M1 to M3 and then to M7 through M5.

By setting the level of YQg0 to V1 and changing the value of XJg0 from V5 to V4 at time T1, the electron level below the quantum dot of M1 and the electron level of the reservoir match, and the potential barrier that separates the reservoir from M1 is lowered by controlling XJg0. Therefore, electrons move to M1 using the tunnel effect.

Thereafter, at time T2, in order that electrons do not move from the reservoir, XJg0 is set to V5, the value of YQg0 is set to the electron movement source control voltage (V2), XQg0 is set to the electron movement destination voltage (V3), and the potential of the potential control MOS M2 between M1 and M3 is set to M4 to lower the potential barrier. As a result, electrons move from M1 to M3.

Then, at time T3, XJg1 is set to V4 to raise the potential barrier between M1 and M3, XJg3 is set to V4 to lower the potential barrier so that electrons can move from M3 to M5, and YQg0 is set to 0 V, XQg0 is set to V2, and XQg1 is set to V3. As a result, electrons move from M3 to M5.

Thereafter, at time T4, XJg3 is set to V4, XJg2 is set to V5, XQg0 is set to 0 V, YQg0 is set to V3, and XQg1 is set to V2, so that electrons move from M5 to M7. After setting the electrons, the electrons can be held by setting the gate voltage, for example, YQg0, to V3. However, since this YQg0 is connected to M1 and M7, the control of M7 and the control of M1 are the same. Incidentally, since both MOSFETs of M0 and M2 are off, no electron movement occurs. Therefore, even if the voltage of this gate is controlled by the subsequent electron movement operation, the electrons stored in M7 are held as they are. Thus, the setting of electrons in M7 is completed.

At time T5, in the same manner as at time T1, electrons are moved to M1. The electrons are moved to M3 at T6, and the electrons are moved to M5 at T7. Thus, the setting of electrons in M7 and M5 is completed.

Subsequently, at T8, electrons are further taken from the reservoir and set in M1, and then at T9, electrons are moved to M3. Thus, the setting of electrons in M7, M5, and M3 is completed.

In addition, at time T10, electrons are taken from the reservoir, and at T11, the electrons are set in M1. As a result, electrons operating as qubits can be stored in all the quantum dots of M1, M3, M5, and M7.

Here, by controlling YQg0, YQg1, YQg2, and YQg3 at the same time with the same voltage as YQg0 shown in Fig. 5, the operations of M0 to M8 are performed in parallel for the MOSFETs connected to XCl0, XCl1, XCl2, and XCl3. Therefore, it is possible to perform initialization in parallel.

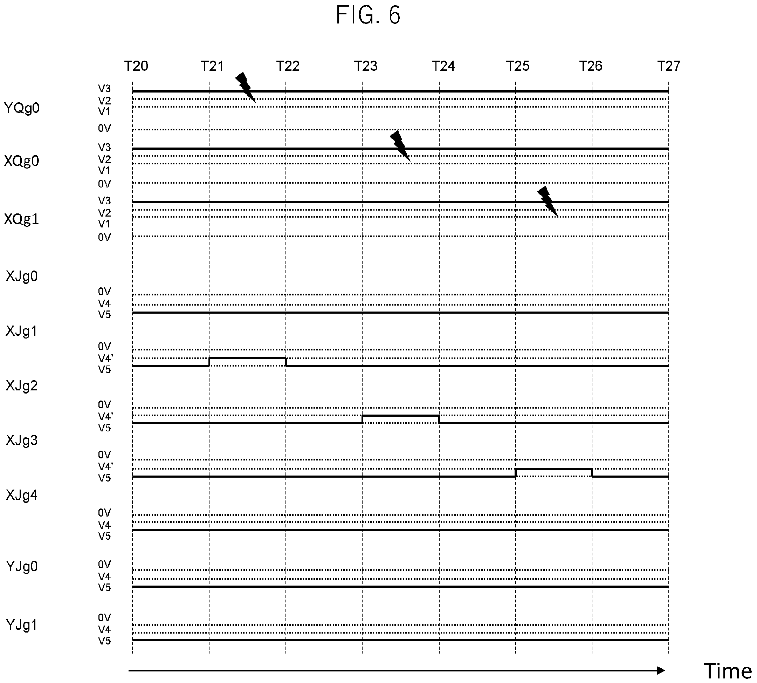

Fig. 6 is a diagram illustrating a spin operation regarding a qubit set in two quantum dots. First, according to Fig. 5, since qubits with the same spin direction are stored as qubits in all quantum dots, YQg0, XQg0, and XQg1 are set to the V3 level, XJg0 to XJg4 are set to V5, and YJg0 and YJg1 are set to V5.

By setting the voltage of XJg1 to V4' at time T21, the interaction between M1 and M3 becomes possible. During this period, by applying an electromagnetic wave with the energy required for the spin operation of the M1 qubit or an electromagnetic wave required for the spin operation of the M3 qubit, it is possible to selectively operate the electron spin of M1 or M3.

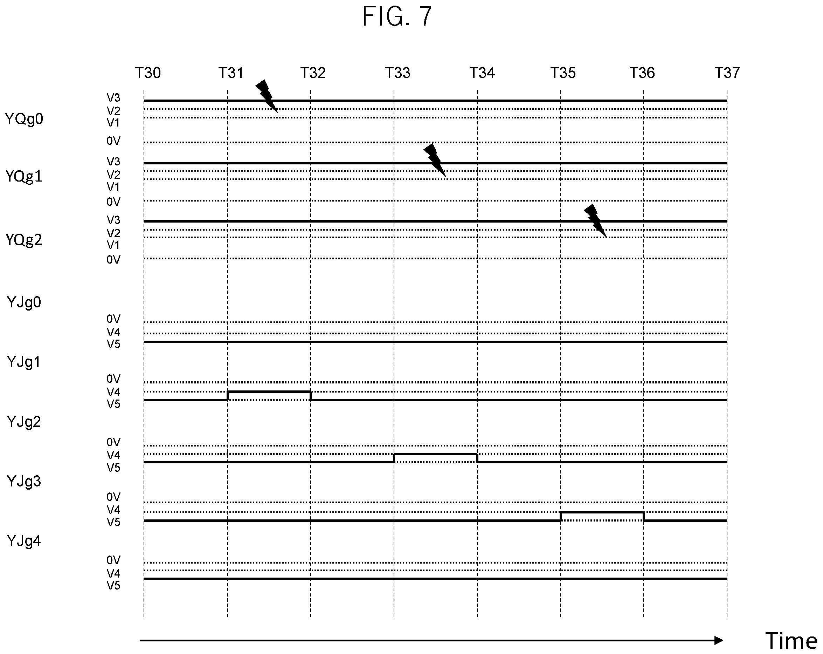

Fig. 7 is a diagram illustrating a spin operation regarding a qubit set in two quantum dots. First, according to Fig. 5, since qubits with the same spin direction are stored as qubits in all quantum dots, YQg0, YQg1, and YQg2 are set to the V3 level, and YJg0 to YJg4 are set to V5.

By setting the voltage of YJg1 to V4' at time T31, the interaction between M1 and M3 becomes possible. During this period, by applying an electromagnetic wave with the energy required for the spin operation of the M1 qubit or an electromagnetic wave required for the spin operation of the M3 qubit, it is possible to selectively operate the electron spin of M1 or M3.

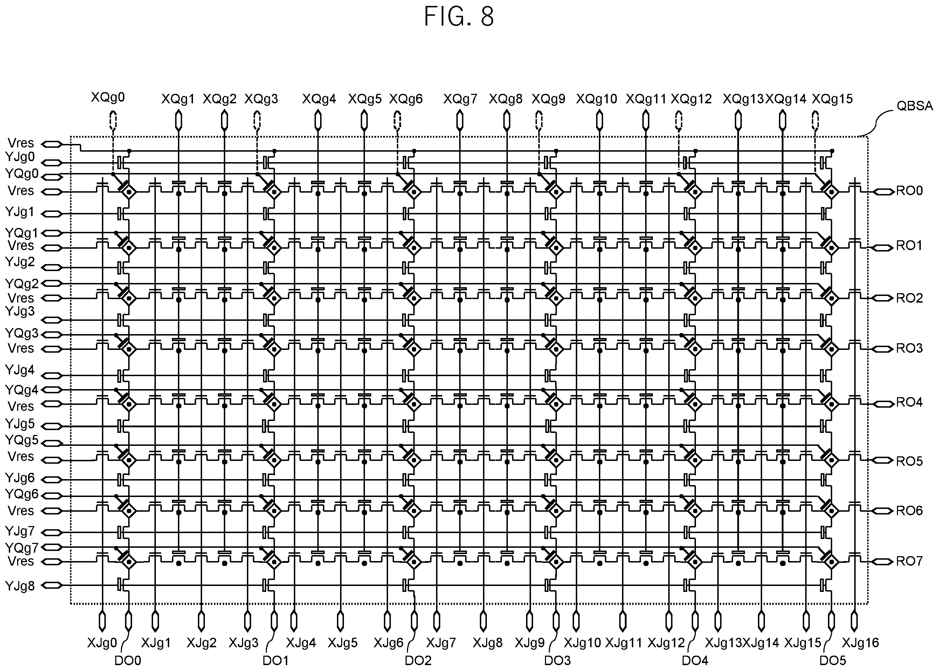

Fig. 8 shows an example in which the basic array shown in Fig. 4 is expanded to 128 quantum dots. This array structure is a two-dimensional array structure in the horizontal axis direction and the vertical axis direction in Fig. 8. When selecting a MOSFET having quantum dots indicated by SG and TG, the gate electrode of the MOSFET indicated by SG is connected to XQgM (M = 1, 2, 4, 5, 7, 8, 10, 11, 13, 14), and the gate electrode of the MOSFET indicated by TG is connected to YQgN (N = 0, 1, 2, 3, 4, 5, 6, 7). Therefore, it is not possible to select a MOSFET having quantum dots simply in the X direction and the Y direction unlike in a normal memory.

Here, for convenience of explanation of the signal line, virtual terminals XQg0, XQg3, XQg6, XQg9, XQg12, and XQg15 are shown by broken lines. For example, when selecting a MOSFET formed by the first SG from the left, it is desired to select XQg0, but in this case, YQg0 should be selected. In addition, when selecting a MOSFET with the second SG from the left, it is desired to select XQg3, but in reality, YQg1 should be selected. That is, in this example, when selecting XQg0, XQg3, XQg6, XQg9, XQg12, and XQg15 (multiple of 3), address translation is required because it is necessary to select YQgN (N = 0, 1, 2, 3, 4, 5, 6, 7) .

An example of address translation for selecting qubits in such an array structure will be described below.

In Fig. 8, the horizontal direction of the paper is the X direction, and the vertical direction of the paper is the Y direction. In Fig. 8, qubits are arranged in a matrix of 16 columns in the X direction and 8 rows in the Y direction. The qubit is configured by a MOSFET having SG. By defining addresses Xaddr[0:15] and Yaddr[0:7] for each qubit, 128 qubits can be selected.

Then, when performing a quantum computation, it is necessary to select one qubit or a plurality of qubits. It is also possible to select each qubit position to be selected. In this case, however, the selection of one qubit requires a control signal of 5 bits for selection in the X and Y directions (since 24 selections are required, $2^5 = 32$ bits are required). When there are a plurality of qubits to be selected, only the number of qubits to be selected is required. In the case of two qubits, a 10-bit signal is required. However, considering that it is difficult to perform a quantum computation from the viewpoint of interaction other than the connection between the nearest quantum dots, it is possible to select quantum dots to interact with each other by setting qubits to be designated and its connection direction.

As an example, a case where two quantum dots are selected will be described. At this time, if a bit DRCT[0] that designates the direction of connection as a horizontal direction or a vertical direction is introduced, only a 6-bit signal is required. In addition, if an internal memory function is provided for X selection and Y selection, it is possible to transmit the X address and Y address in a time division manner. In this example, since the number of bits for X selection is larger than the number of bits for Y selection, only 5 bits are required. In this manner, it is possible to reduce the number of control lines and the number of controls.

Next, address translation will be described in detail. In the example shown in Fig. 8, formally, the addresses indicated by XQg[0:15] and YQg[0:7] enable access to MOSFETs holding qubits. However, as will be described later, since XQg0, XQg3, XQg6, XQg9, XQg12, and XQg15 are substantially connected to YQg0 to XQg7, these are used as virtual terminals herein. In addition, XJg[0:16] and YJg[0:8] enable access to MOSFETs that control the potential between quantum dots. Here, the logic of address generation will be described with an example of selecting two qubits.

Basically, since the present embodiment has a two-dimensional structure, one qubit is selected by the coordinates in the X and Y directions. However, in this qubit array, not only are the qubits at the intersections indicated by the X and Y coordinates selected, but also the gates of a plurality of MOSFETs are selected at the same time by one X coordinate selection signal and the Y coordinate selection signal. In addition, in the selection of a qubit in which the diffusion layer is connected in the X direction in the qubit array, since the gate wiring of the corresponding MOSFET extends in the Y direction, the selection is made by the X coordinate selection signal. On the other hand, in the selection of a qubit in which the diffusion layer is connected in the Y direction, since the gate wiring of the corresponding MOSFET extends in the X direction, the selection cannot be made by the X coordinate and the selection should be made by the Y coordinate.

Regarding the spin operation of a qubit, by emitting an electromagnetic wave with energy equal to the quantization energy that changes the spin state of the electron of the qubit of interest after selecting the qubit of interest as described above, a selective spin operation of the qubit of interest becomes possible. For such control of electromagnetic waves, the frequency of electromagnetic waves is controlled by using the relationship in which energy and frequency are proportional to each other. In this case, since 128 qubits are controlled, the frequency of the electromagnetic wave for control can be realized by providing 128 different frequencies.

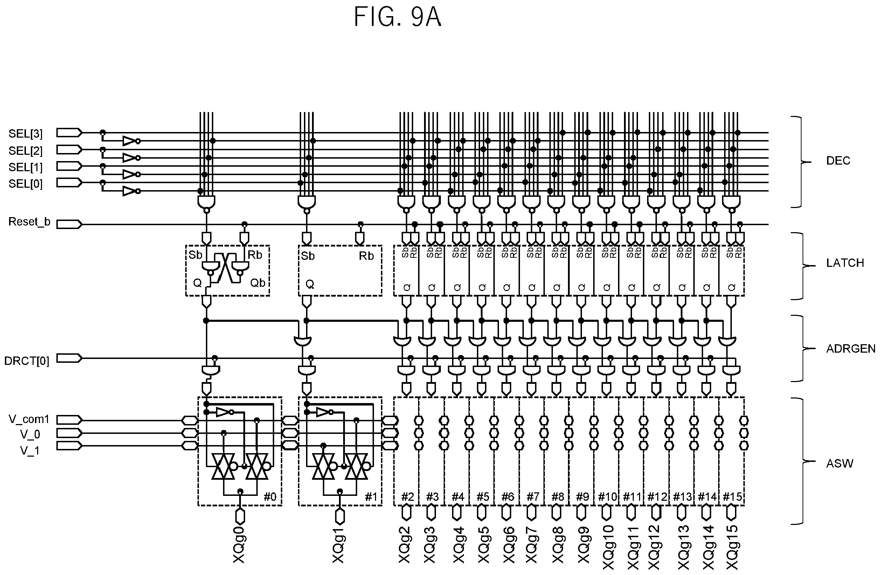

Address generation for performing qubit selection will be described with reference to Figs. 9A to 9D. Fig. 9A shows an example of a selection circuit for selecting a qubit in the X direction. This is an example of a decoder for decoding an encoded address input from the outside and a circuit for selecting a desired qubit in an array in order to designate the address of the gate of a MOSFET having qubits. The selection circuits shown in Figs. 9A to 9D function to cause a plurality of qubits of QBSA to perform parallel computations. In Fig. 9A, the selection circuit is configured to include a decoder (DEC) that decodes 4-bit selection signals (SEL[0] to SEL[3]), a latch unit (LATCH) that holds the decoding information, an address generator (ADRGEN) that generates the address of the qubit for computation based on the decoded signal, and an analog switch unit (ASW) for selectively applying the desired voltage to the gate electrode. The decoding result of the selection signal is Xaddr[0] to Xaddr[15].

Fig. 9A shows an example of address generation in which, when one address is selected, the adjacent address can be selected at the same time. Since this circuit includes a latch, a reset signal (Reset_b) for resetting the latch and a signal DRCT[0] for designating the interaction in the horizontal direction are input. For address generation, a logic that performs address generation when DRCT[0] is Hi is applied. The logic expression is written as follows.

$$XQg[i] = DRCT[0] \text{ \& } (Xaddr[i-1] | Xaddr[i]).$$

At this time, Xaddr[-1] = 0 is defined internally.

When DRCT[0] is Hi, if one address is set, the next address is also selected. In addition, since a latch is provided, a plurality of addresses can be selected at the same time. For example, when the first and second addresses are selected from the left, the third address is also selected. In a quantum computer, the computation of two qubits is the main purpose. Therefore, if two qubits can be selected with one address, there is an effect of reducing the number of signal lines for address designation and the time penalty for address transmission, which is convenient.

In the present embodiment, the applied voltage can be changed between even and odd numbers. That is, the analog switch unit ASW can independently control the voltage control lines connected at the even and odd numbers. The even-numbered analog switch is a switch for switching between V_com and V_0, and the odd-numbered analog switch is a switch for switching between V_com and V_1. This is because it is necessary to change the voltage with adjacent MOSFETs when moving electrons between quantum dots and it is necessary to operate the gate electrodes of the MOSFETs with two quantum dots independently in order to check the structure of quantum dots.

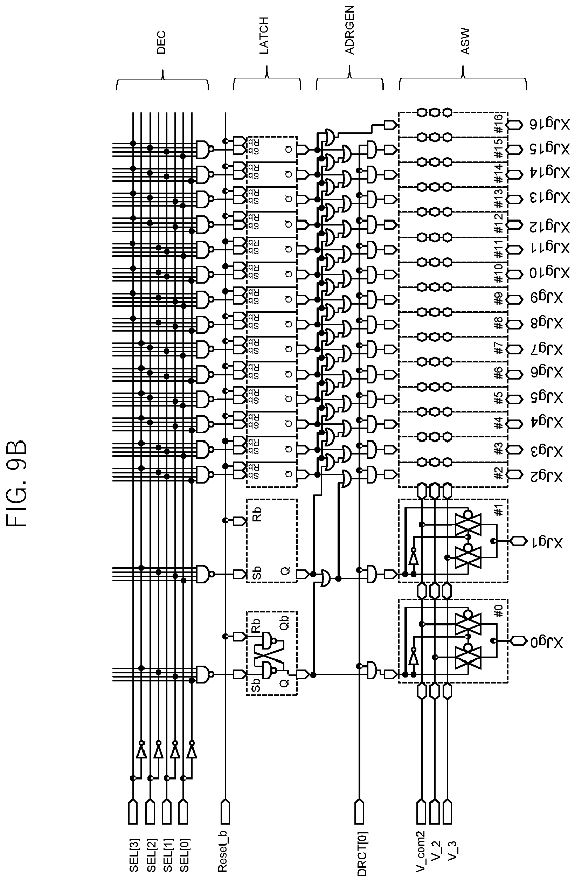

Fig. 9B shows an example of a selection circuit for selecting a quantum dot in the X direction. The structure is almost the same as the example of Fig. 9A, but is different from the example of Fig. 9A in that the number of selection signals XJg0 to XJg16 is one more than that in the example of Fig. 9A and the logic of the address translation unit is different. This is an example of a decoder for decoding an encoded address input from the outside and a circuit for selecting a desired control target qubit in an array in order to designate the address of the gate of a MOSFET for performing potential control between qubits.

In Fig. 9B, the selection circuit is configured to include a decoder (DEC) that decodes 4-bit selection signals (SEL[0] to SEL[3]), a latch unit (LATCH) that holds the decoding information, an address generator (ADRGEN) that generates the address of the qubit for computation based on the decoded signal, and an analog switch unit (ASW) for selectively applying the desired voltage to the gate electrode. The decoder may be shared with the decoder shown in Fig. 9A. Fig. 9B shows an example of address generation in which, when one address is selected, the adjacent address can be selected at the same time. Since this circuit includes a latch, a reset signal (Reset_b) for resetting the latch and a signal DRCT[0] for designating the interaction in the horizontal direction are input. For address generation, a logic that performs address generation when DRCT[0] is Hi is applied. The logic expression is written as follows.

$$XJg[i] = DRCT[0] \text{ \& } (Xaddr[i-2] | Xaddr[i-1] | Xaddr[i]).$$

At this time, Xaddr[-1] = Xaddr[-2] = 0 is defined internally.

When DRCT[0] is Hi, if one address is set, the adjacent MOSFET and a MOSFET next to the adjacent MOSFET are also selected. In addition, since a latch is provided, a plurality of addresses can be selected at the same time. For example, when the first and second addresses are selected from the left, the third and fourth addresses are also selected. In a quantum computer, the computation of two qubits is the main purpose. Therefore, if two qubits can be selected with one address, there is an effect of reducing the number of signal lines for address designation and the time penalty for address transmission, which is convenient.

In the configuration shown in Fig. 9B, the applied voltage can be changed between even and odd numbers. This is because, when controlling the electron spin by making the qubits captured by two quantum dots interact with each other to apply a high frequency signal, it is necessary to increase the potentials of MOSFETs (for example, when XQg1 and Xqg2 are made to interact with each other, XJg1 and XJg3) outside the two quantum dots by applying the same voltage and adjust the potential of a MOSFET (XJg2) between the two quantum dots.

However, as described above, in the subarray shown in Fig. 8, XQg0, XQg3, XQg6, XQg9, XQg12, and XQg15 are not actually connected to the MOSFETs in the subarray, and when these are selected, the MOSFETs in the subarray need to be selected in combination with the selection of YQg0 to YQg7. Therefore, the generation of Y control signals for Y selection required to select qubits of interest from these X selection signals will be described. In the example shown in Fig. 8, MOSFETs having SGs connected in the vertical direction are present at the first, third, sixth, ninth, twelfth, and fifteenth positions from the left in the same diagram. That is, since the cycle is 3, it is necessary to find an address divisible by 3 that is the cycle, and in this case, it is necessary to perform control by YQg# instead of XQg#. In addition, even if the remainder is 2 as a result of dividing by 3, it is necessary to select the qubit of the address divisible by 3 in consideration of the interaction in the horizontal direction. Therefore, also in this case, it is necessary to select YQg#. Therefore, as described below, it is convenient to generate a signal by taking OR between an address divisible by 3 and an address that is divided by 3 and has a remainder of 2.

$$XS0mod3 =$$

$$(Xaddr[0]|Xaddr[3]|Xaddr[6]|Xaddr[9]|Xaddr[12]|Xaddr[15])$$

$$XS2mod3 =$$

$$(Xaddr[2]|Xaddr[5]|Xaddr[8]|Xaddr[11]|Xaddr[14])$$

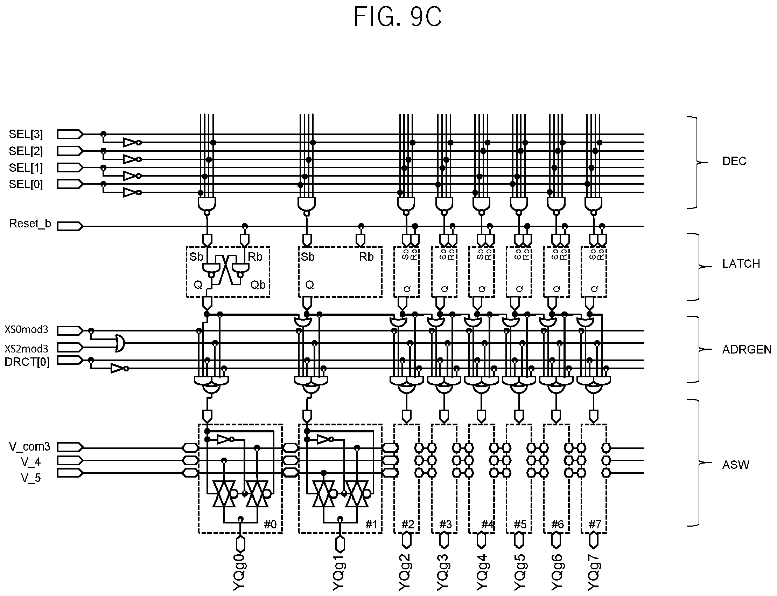

Next, the selection in the Y direction will be described. Fig. 9C shows an example of a selection circuit for selecting a quantum dot in the Y direction. The structure is almost the same as the selection circuits shown in Figs. 9A and 9B, but is different from the selection circuits shown in Figs. 9A and 9B in that the number of selection signals YQg0 to YQg7 is small and the logic of the address translation unit is different. This is an example of a decoder for decoding an encoded address from the outside and a circuit for selecting a desired qubit in an array in order to designate the address of the gate of a MOSFET having qubits.

In Fig. 9C, the selection circuit is configured to include a decoder (DEC) that decodes 4-bit selection signals (SEL[0] to SEL[3]), a latch unit (LATCH) that holds the decoding information, an address generator (ADRGEN) that generates the address of the qubit for computation based on the decoded signal, and an analog switch unit (ASW) for selectively applying the desired voltage to the gate electrode. The decoding result of the selection signal is Yaddr[0] to Yaddr[7].

In Fig. 9C, a 4-bit decoder is shown. Since the number of addresses is 8, three bits are sufficient. However, by sharing the same circuit as the X-direction decoder and configuring this as one chip, there is an effect that the entire area is reduced. In the present embodiment, the address generation differs depending on whether the horizontal direction is selected or the vertical direction is selected in the subarray shown in Fig. 8. This is an example of address generation in which, in the case of selection of the horizontal direction, when there is an address when the X-direction selection address is a multiple of 3 or divided by 3 and the remainder is 2, a function of selecting one address is provided, and in the case of selection of the vertical direction, when there is an address when the X-direction selection address is a multiple of 3 or divided by 3 and the remainder is 2, the address and the next lower address can be selected at the same time. Since this circuit includes a latch, a reset signal (Reset_b) for resetting the latch and a signal DRCT[0] for designating the interaction in the horizontal direction are input. For the address generation, determination using the following logic expression can be made when DRCT[0] is Hi and when DRCT[0] is Lo.

$$YQg[i] = DRCT[0] \& Yaddr[i] \& (XS0mod3|XS2mod3)| \sim DRCT[0]$$

$$\& (Yaddr[i-1]|Yaddr[i]) \& XS0mod3)$$

Here, Yaddr[-1] = 0 is defined internally.

By translating the address in this manner, it becomes possible to control the voltage of each MOSFET for the spin operation of a desired qubit.

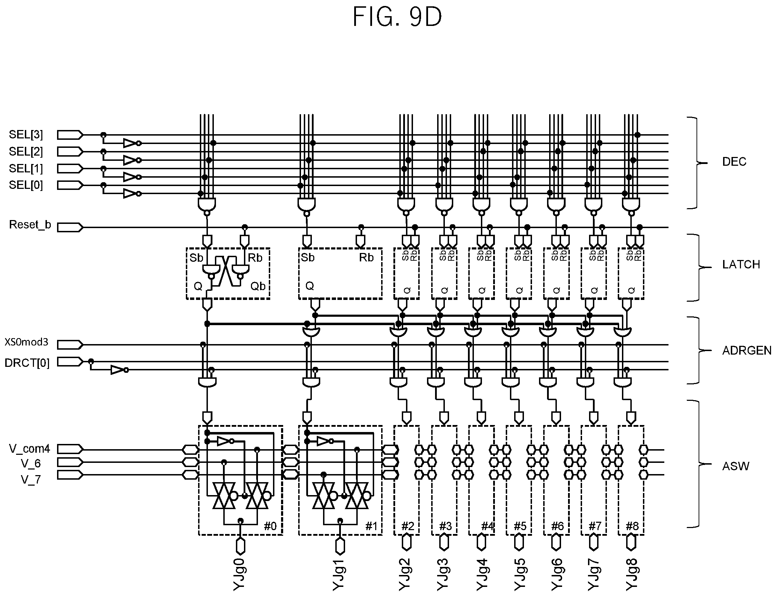

Fig. 9D shows an example of a selection circuit for selecting a MOSFET for potential control between quantum dots in the Y direction. The structure is almost the same as the example of Fig. 9C, but is different from the example of Fig. 9C in that the number of selection signals YJg0 to YJg8 is one more than that in the example of Fig. 9c and the logic of the address translation unit is different. This is an example of a decoder for decoding an encoded address from the outside and a circuit for selecting a desired qubit in an array in order to designate the address of the gate of a MOSFET having qubits. In Fig. 9D, the selection circuit is configured to include a decoder (DEC) that decodes 4-bit selection signals (SEL[0] to SEL[3]), a latch unit (LATCH) that holds the decoding information, an address generator (ADRGEN) that generates the address of the qubit for computation based on the decoded signal, and an analog switch unit (ASW) for selectively applying the desired voltage to the gate electrode. The decoding result of the selection signal is Yaddr[0] to Yaddr[7].

In Fig. 9D, a 4-bit decoder circuit is configured. In Fig. 9D, since the number of addresses is 9 but the ninth address is generated by the internal logic, three bits are sufficient. However, by sharing the same circuit as the X-direction decoder and configuring this as one chip, there is an effect that the entire area is reduced. In the present embodiment, this is required when controlling the selection in the vertical direction. The case of selection in the vertical direction is an example of address generation in which, when the selection in the X direction is a multiple of 3, the address and the next lower address can be selected at the same time. Since this circuit includes a latch, a reset signal (Reset_b) for resetting the latch and a signal DRCT[0] for designating the interaction in the horizontal direction are input. For the address generation, determination using the following logic expression can be made when DRCT[0] is Lo.

$$YJg[i] = \sim DRCT[0] \ \& \ (Yaddr[i-2]|Yaddr[i-1]|Yaddr[i]) \ \&$$

$$XS0mod3.$$

Here, Yaddr[-1] = Yaddr[-2] = 0 is defined internally.

By translating the address in this manner, it becomes possible to control the voltage of each MOSFET for the spin operation of a desired qubit.

In addition, without being limited to the embodiment described above, by performing appropriate address translation, it is possible to access a desired address with the internal address translation circuit while expressing the selection of MOSFETs having qubits to be controlled in the XY coordinate system from the outside.

In the embodiment described above, the case where the cycle of the vertical connection is 3 is shown. However, even if the vertical connection cycle is different, the same address translation as above may be performed. In addition, even if the cycle is different, appropriate address translation is possible if a translation map is appropriately prepared.

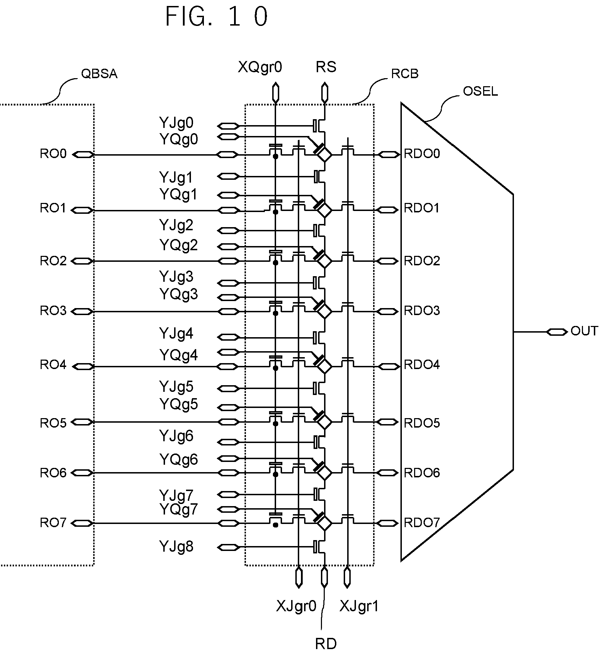

Fig. 10 shows an example of a read circuit that reads out the computation result of quantum computation for the subarray of the qubits shown in Fig. 8. Fig. 10 shows a read sense circuit, which is configured to include MOSFETs having SG connected to the signal line XQgr0, MOSFETs having FG connected to the signal lines XJgr0 and XJgr1, MOSFETs having TG connected to the signal lines YQg0 to YQg7, and MOSFETs having HG connected to the signal lines YJg0 to YJg8, and a selector circuit to select reading.

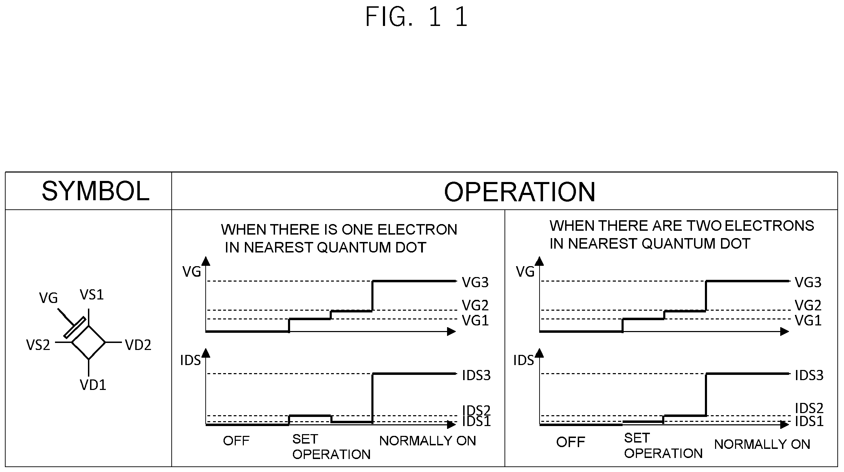

The MOSFETs having TG connected to the signal lines YQg0 to YQg7 are denoted by the symbol of the MOSFET shown in Fig. 11, and a symbol different from the MOSFETs connected to the signal lines YQg0 to YQg7 shown in Fig. 8 is introduced. These MOSFETs are manufactured by structurally the same process, but the operation modes are different. Since the MOSFET in Fig. 10 operates in a mode in which the MOSFET operates without providing a quantum dot holding a qubit, a different symbol is introduced.

Assuming that the gate voltage is VG3, this MOSFET performs a normal ON operation and an OFF operation at 0 V. In addition, by using VG1 and VG2 as intermediate voltages, IDS current flowing at the value of VGS can be different depending on the number of electrons captured by the quantum dots of the nearest MOSFET, and this difference can be used for reading. For example, in the case of setting to VG1, IDS2 current flows when there is one electron in the nearest quantum dot, and IDS1 current flows when there are two electrons in the quantum dot. In addition, in the case of setting to VG2, IDS1 current flows when there is one electron in the nearest quantum dot, and IDS2 current flows when there are two electrons in the quantum dot. Here, IDS2 > IDS1.

The number of electrons present in the quantum dot can be read out by the above principle. Therefore, a method of reading out the number of electrons present in a plurality of quantum dots of the present embodiment will be described. For example, an example of measuring the current of RDO5 in Fig. 10 will be described. In this case, YJg0 to YJg5 connected to RS are turned on, YQg0 to YQg4 are turned on, YQg5 is set to the single electron read state, YJg6 to YJg8 are turned off, and YQg6 to YQg7 are turned off. In addition, RD05 is connected to OUT by an output selection circuit OSEL, and the others are turned off. In this manner, a current path from the read source RS to OUT is formed, and the MOSFET connected to YQg5 allow the flow of a current according to the number of electrons present in the nearest quantum dot. Therefore, the number of electrons is detected by measuring the current. From the detected number of electrons, it is possible to determine the spin direction of the qubit present in the quantum dot to be measured.

The signal lines YQg0 to YQg7 and the signal lines YJg0 to YJg8 are the same as the signal line having the subarray structure shown in Fig. 8, but may be controlled independently. According to Morello, A., Pla, J., Zwanenburg, F. et al., Single-shot readout of an electron spin in silicon. Nature 467, 687-691 (2010), it is known that, by appropriately controlling the gate voltage of the single electron transistor, the amount of current flowing through the channel of the MOSFET changes according to the number of electrons captured by the quantum dots of the nearest MOSFET. Therefore, the reading method of the present embodiment is an example of a reading method to which this principle is applied. In the case of using the electron spin when operating qubits as a quantum computer, one electron is captured in each quantum dot, and information is held and computed in the spin direction of the captured electron. According to the Pauli exclusion principle, electrons have a restriction that electrons with the same spin direction cannot enter the same energy level.

Using this fact, for example, when the spins of the quantum dots of interest are aligned as upspins, if the spin of the electron of the nearest quantum dot is a downspin, it is possible to move the electrons from the nearest quantum dot to the quantum dot of interest by aligning the energy levels of the electrons in the quantum dots. As a result, two electrons can enter the quantum dots of interest. On the other hand, similarly, if the electron spin of the nearest quantum dot is an upspin with respect to the quantum dot of interest, it is not possible to move the electrons from the nearest quantum dot to the quantum dot of interest by aligning the energy levels of the electrons in the quantum dots. As a result, one electron remains in the quantum dot of interest.

In this manner, the information of the electron spin is replaced with the information of the number of electrons, and the state of one or two electrons is detected by the MOSFET and read out.

In addition, since the read current is very small, it is desirable to mount an amplifier for current amplification. Therefore, although not shown herein, it is effective to mount an amplifier for current amplification in the front stage of RDO0 to RD07 of the selector input or in the rear stage of OUT of the selector output.

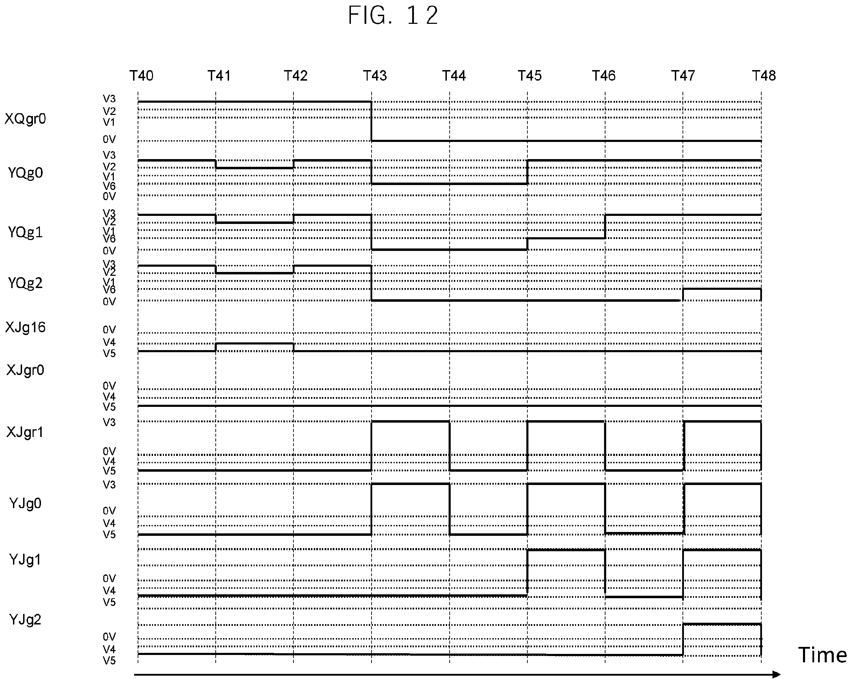

A method of reading out a quantum computation result in a mode of measuring the current of the nearest quantum dot with a MOSFET having no quantum dot for reading sense in this method will be described with reference to Fig. 12.

When the quantum computation ends, in the present embodiment, an algorithm is set such that the qubit made in the MOSFET formed by TG on the rightmost side of the qubit subarray QBSA has information to be measured. By observing this qubit, the result of quantum computation can be obtained.

Depending on the qubit information held in this qubit at time T41, that is, the direction of the spin of the electron as a qubit captured by the quantum dot, for example, assuming that the spin set in the quantum dot for read sense is an upspin, only when the spin of the read qubit is downspin, electron movement occurs and it is possible to create a state in which one electron or two electrons are present in the quantum dot for read sense. To do so, first, the gates of YQg0 to YQg7 (here, YQg0 to YQg2 are described) are set to V2 voltage, the voltage of XQgr0 is set to V3, XJg16 is set to V4 level, and XJgr0 is set to V5, so that the movement of electrons can be made. Once the movement of electrons is made, observation is performed herein, so that the state of the electron becomes the classical state and the state becomes stable. Conversely, it is necessary to complete the movement of electrons within the coherent time of the qubit. At time T42, an example is shown in which the state is maintained after the end of the movement of electrons.

Thereafter, at time T43, XQgr0 is set to 0 V to close the connection with the MOSFET for current measurement. At this time, by setting XJgr1 to V3, YJg0 to V3, and YJg1 YJg7 to V5, the number of electrons set in the nearest MOSFET for read sense on the left side of the MOSFET connected to YQg0 can be measured by the amount of flowing current. At this time, YQg0 is set to V6 voltage, and YQg1 to YQg7 are set to, for example, 0 V, in order to cut off the current path. At this time, although not shown, a switch is controlled so as to select the current path in the selector circuit.

At time T44, an operation of turning off the current read path is shown. By turning off XJg1 and YJg0 to YJg7, the current path is cut off. This is not shown, but when a precharge type sense amplifier is used in the subsequent stage, it is convenient to turn off the current path to precharge the amplifier, which is also a control for the purpose. At time T45, an example is shown in which the number of electrons set in the nearest MOSFET for read sense on the left side of the MOSFET connected to YQg1 can be measured by the amount of flowing current. At this time, first, XJgr1 is set to V3, YJg0 and YJg1 is set to V3, YQg0 is set to V3, and YQg1 is set to V6. Then, XJgr1 may be set to V3, YJg0 and YJg1 may be set to V3, and YJg2 to YJg7 may be set to V5. At this time, although not shown, a switch is controlled so as to select the current path in the selector circuit.

Time T46 is a non-selective example like time T44.

At time T47, an example is shown in which the number of electrons set in the nearest MOSFET for read sense on the left side of the MOSFET connected to YQg2 can be measured by the amount of flowing current. At this time, first, XJgr1 is set to V3, YJg0 to YJg2 is set to V3, YQg0 and YQg1 are set to V3, and YQg2 is set to V6. Then, XJgr1 may be set to V3, YJg0 to YJg2 may be set to V3, and YJg3 to YJg7 may be set to V5. At this time, although not shown, a switch is controlled so as to select the current path in the selector circuit.

In this manner, it is possible to read the computation result of the rightmost qubit in the array.

On the other hand, in the case of performing reflection measurement as a measurement method, the measurement can be performed by applying an RF signal to RO0 to RO7 of the subarray shown in Fig. 8.

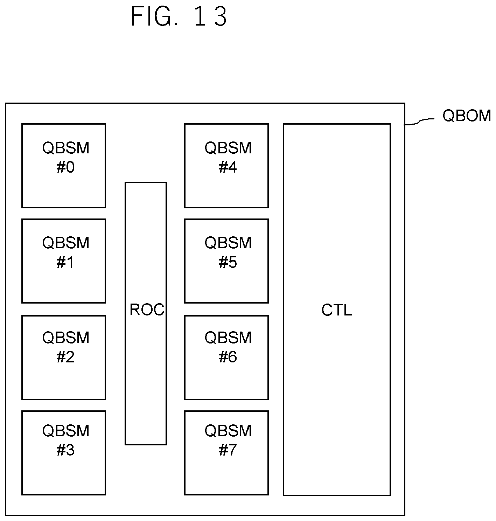

Fig. 13 shows an example of a qubit subarray 8-unit module (QBOM) in which eight qubit subarray modules (QBSM) described above are integrated. Here, an example in which eight QBSMs are mounted is shown, but the number of QBSMs does not need to be limited to eight.

One of the features of the present embodiment is to disclose a means for creating a quantum computer using a qubit whose fidelity of qubits is not so high. In this case, even if the probability of showing the correct answer as a quantum computation result in the qubit subarray (QBSA) is small, it is possible to use the quantum computer. In Fig. 13, eight qubit subarray modules (QBSM) (QBSM#0 to QBSM#7) are integrated, and a control circuit (CTL) for controlling the QBSM is built in. The control circuit controls XDECD, XDECU, and YDEC of a plurality of QBSMs mounted in the parallel computation module (QBOM), and causes quantum computation units (QBSA) of the plurality of QBSMs to perform parallel computations. The parallel computations are performed at the same time, but "at the same time" includes "exactly the same in time" and "not exactly the same in time".

In this control circuit, a means such as a memory for storing a control sequence, such as selection of qubits required for quantum computation, voltage control for potential control between the selected qubits and adjacent qubits, and electromagnetic wave emission, may be provided as a quantum program.

In Fig. 13, a circuit for reading out a weak signal from each QBSM is provided. Since the signal of one electron is weak, some form of amplification device is required. As an example, when performing reading with a single electron transistor (SET), it is assumed that a minute current is generated per qubit. In Fig. 13, read circuits (ROC) obtained by integrating read current amplification circuits are integrated. As an example of the ROC, it is considered effective to amplify the current read out by SET together with the signals from a plurality of circuits. In this case, due to the low fidelity of qubits, there may be the influence of (1) error when the direction of the electron spin of the qubit deviates from the desired true value and (2) operation error in the read circuit when observing the electron spin. In order to avoid this, the influence of abnormal values is eliminated as much as possible by taking the statistical average of the computation results of many same circuits, so that the accuracy of the solution obtained by majority vote is improved.

This ROC has a function of amplifying the output signal from each QBSM as needed and a function of taking a majority vote of those values. As an example, when the output from each QBSM is a current signal having an analog value, their output currents are added, integrated, amplified, and converted into a digital level. If digitization is difficult at the level of this hierarchy, it is possible to use an analog signal at this hierarchy and digitize the analog signal at another hierarchy.

Alternatively, when the output from each QBSM is a digital signal, a majority vote is taken for those values, and finally "0" and "1" are converted into digital signals. At this time, it is necessary to take a majority vote with an odd number of modules. For this reason, a function is provided to mask the outputs from some QBSMs when inputting the outputs to the ROC so that the number of QBSMs is an odd number and to take a majority vote with signals other than the masked signals. The mask of this output signal is realized by providing a function to monitor and select the yield or fidelity information of QBSM qubits.

As another method, it is possible to monitor the yield or fidelity of qubits of each QBSM, give an individual weighting to the output signal from each QBSM, add the outputs by weighting in the ROC, and set the reading result of the qubit to "0" and "1".

Thus, there are provided the qubit subarray module (QBSM) having qubit subarrays (QBSA), which are quantum computation units having a plurality of qubits, and the read circuit (ROC) that acquires the parallel computation results of the quantum computation units and performs statistical averaging on the plurality of acquired computation results.

In this manner, by the ROC, in the QBSAs where the computation results of a plurality of quantum computation units have the same configuration, a large number of quantum computation units having the same circuit configuration perform parallel processing (including the case of exactly the same in time and the case of not exactly the same in time).

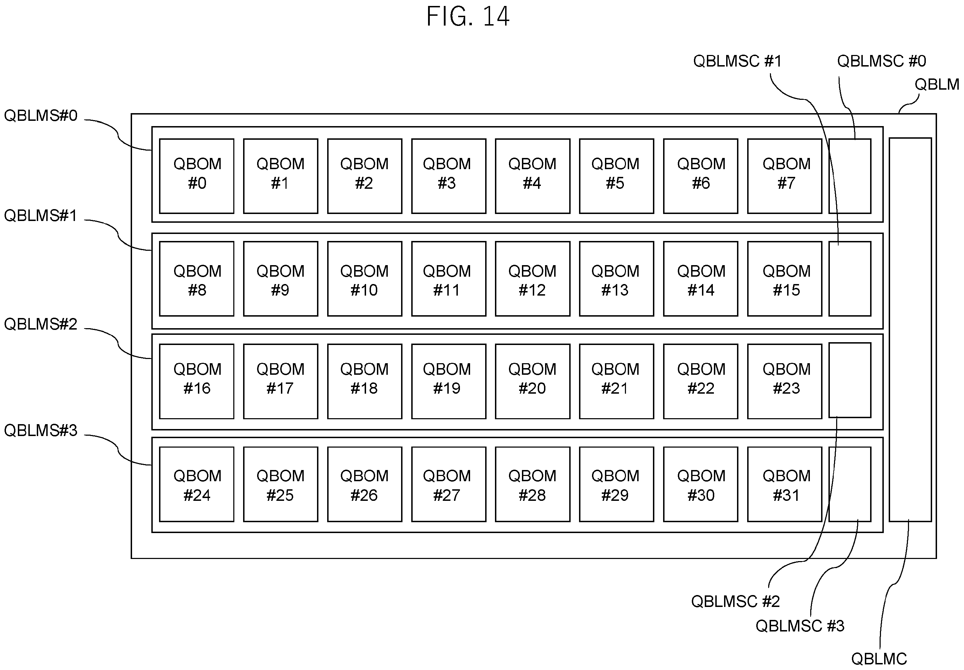

Fig. 14 shows an example of a large qubit module (QBLM) in which a plurality of qubit subarray 8-unit modules QBOM are mounted. Fig. 14 shows an example of a macro (QBLMS) in which a plurality of large qubit modules, each of which has 32 QBOMs mounted therein, are integrated and a QBLM in which four QBLMSs are mounted. For example, if the same computation is mapped to QBOM#0 to QBOM#7 integrated in QBLMS#0, the same quantum computation output result can be obtained from 64 qubit subarray modules. By taking a statistical average with QBLMSC using these 64 outputs, the accuracy of the solution values is improved. If the number of QBOMs is eight that is not enough, the number of QBOMs is increased to improve the accuracy of the solution. It is possible to increase an arbitrary number of QBOMs. In the example of Fig. 14, by uniting eight QBOMs together, designing with the same layout becomes easy, so that the design efficiency can be improved. For each of QBSM, QBSA, XDECD, XDECU, YDEC, and OSEL are mounted in the same layout.

In this case, it is efficient to mount a control circuit (QBLSMSC) for controlling the eight QBOMs. In addition, by further mounting a control circuit (QBLMC) for controlling the four QBLMSs shown in Fig. 14 to control each QBLSMSC, hierarchical control becomes possible. As a result, the control becomes more efficient.

If this QBLMSC can also hold the variation information of each QBOM, it is effective when taking the statistical average of the computation results of the QBOMs. For example, for a qubit array, by storing information on the fidelity of each qubit, it can be expected to improve the accuracy when performing an averaging operation by using the fidelity information as a weighting factor when calculating a statistical average. For example, for a qubit with low fidelity, by setting the weighting to 1/10 or the like, the influence of the qubit with low fidelity can be suppressed to a low level. Therefore, an improvement in computation accuracy can be expected.

In addition, it is desirable to have this fidelity information for each qubit in order to improve the computation accuracy, but it is not always necessary to hold the fidelity information for all qubits. For example, information in units of qubit subarrays may be used. By holding information in units of subarrays, it is possible to reduce the amount of weighting data for taking a statistical average, so that the hardware scale can be reduced.

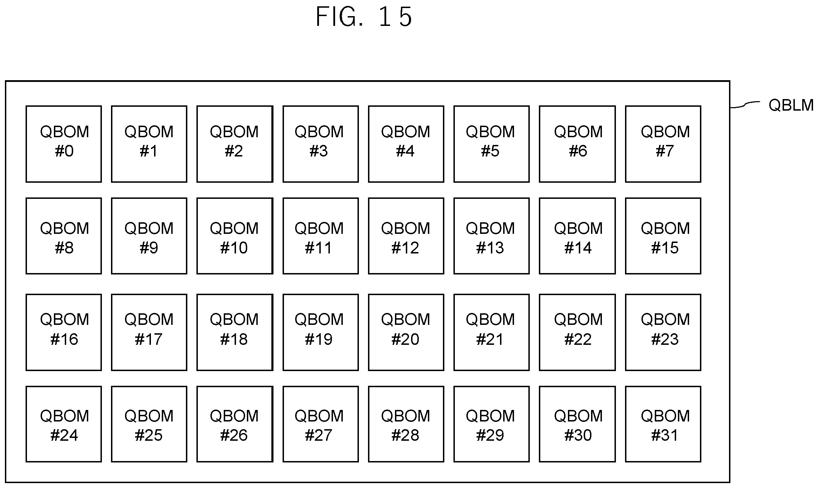

Fig. 15 shows an example of a large qubit module (QBLM) in which a plurality of qubit subarray 8-unit modules QBOM are mounted. Fig. 15 shows a QBLM in which 32 QBOMs are mounted. For example, if the same computation is mapped to QBOM#0 to QBOM#7, the output results of 64 qubit subarray modules can be obtained. By taking a statistical average using the 64 outputs, the accuracy of the solution values is improved. If the number of QBOMs is eight that is not enough, the number of QBOMs is increased to improve the accuracy of the solution. It is possible to increase an arbitrary number of QBOMs. In the example of Fig. 15, by uniting eight QBOMs together, designing with the same layout becomes possible, so that the design efficiency can be improved.

In this manner, it is also possible to simply mount QBOMs. In this case, the simplest configuration becomes possible.

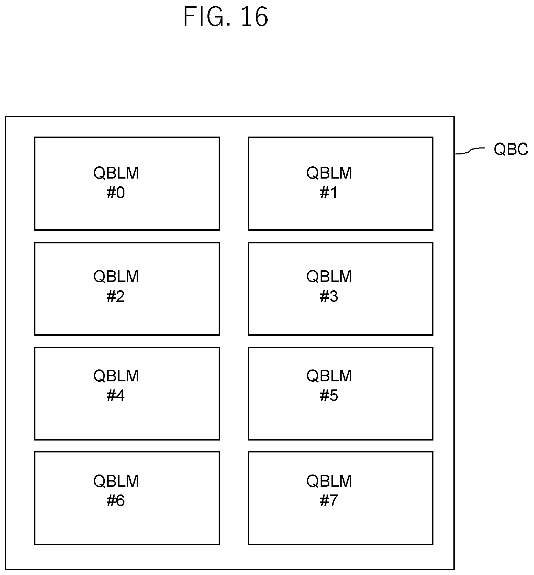

Fig. 16 shows an example in which a plurality of QBLMs are mounted. By mounting QBLM#0 to QBLM#7, 2048 QBSAs are integrated. Fig. 16 shows an example of integrating 256 k qubits of physical qubits. Assuming that the unit of QBC is a qubit LSI chip, this example is an example of integrating 256 K qubits on one LSI chip.

Thus, a large number of small qubit subarrays can be hierarchically integrated, and multiple quantum computations can be performed at the same time. Therefore, even if the fidelity of each qubit to perform the computation is low, it is possible to improve the accuracy of the solution by performing classical statistical processing using the computation results of a plurality of qubit subarrays that perform the same computation.

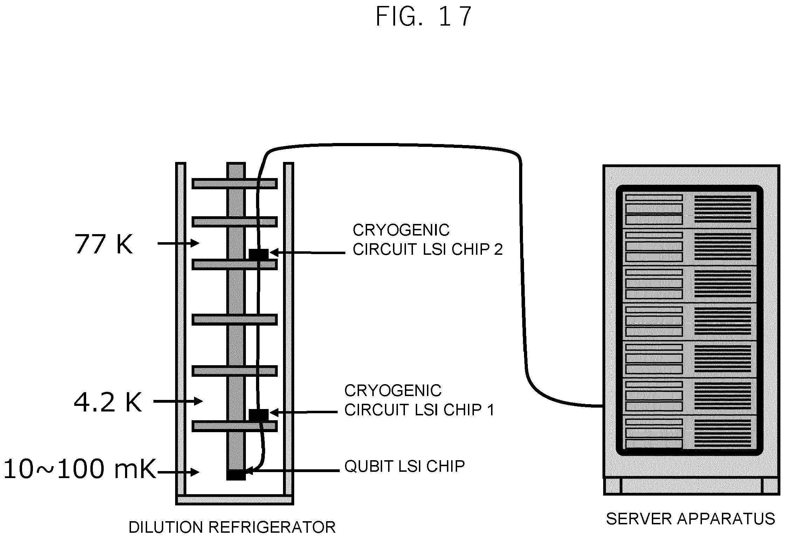

Fig. 17 is a diagram showing the overall structure of the quantum computer of the invention. The qubit LSI chips (QBSM, QBOM, QBLM, and QBC) shown in Fig. 16 for performing quantum computations are provided at the coolest part in the dilution refrigerator. Since LSI chips that can operate at extremely low temperature (cryogenic circuit LSI chips) have heat generation restrictions, the qubit LSI chips are mounted at a place where liquid nitrogen can be used to cool a part that requires high power (temperature is 77K), and a part that requires close signal exchange with the qubit is mounted in a liquid helium temperature region. The system mounted in this dilution refrigerator is controlled by a classical computer apparatus, such as a server placed at room temperature. That is, classical statistical processing is performed by a classical computer. This classical computer performs statistical processing by collecting a plurality of quantum computation results for each array of a plurality of qubit subarrays read by the read circuit, and performs an averaging process for obtaining a solution.

The classical computer apparatus controls cryogenic circuit LSI chips or qubit LSI chips, compiles a program for performing quantum computations, and has a function of receiving the read signals from qubit chips and statistically averaging the quantum computation results and a function of visualizing the obtained results. The user can perform quantum computations by accessing a server apparatus in a network environment. The obtained results can be checked on the user's personal computer or the like using a web application or the like.

In addition, as in the Monte Carlo computation, it is conceivable to set an initial value when performing a quantum computation on a classical computer and perform the quantum computation multiple times. On the classical computer, it is conceivable to perform the quantum computation by calculating the degree of parallelism of quantum computation, the number of repeated trials to obtain the result of one quantum computation, the number of sequential computations when changing the initial value based on the result obtained by quantum computation and performing sequential computations multiple times, and the like.

The classical computer unit has a function of performing statistical averaging based on the quantum computation results obtained by the above operations and presenting the result as a final solution.

By using the quantum computation unit (QBSA) as an accelerator, it is possible to perform complex computations based on quantum mechanics, which have been difficult with classical computers, at high speed and with more accurate values.

As described above, according to the embodiment, by increasing the number of qubits of the quantum computer, it is possible to realize the quantum acceleration of the computing performance by the quantum computer. Therefore, the invention can be applied to fields such as drug discovery, chemical material development, and finance.

**Claims**

**1.** A quantum computer, comprising:

a module including quantum computation units having a plurality of qubits and a selection unit that causes the quantum computation units to perform parallel computations; and

a read unit that acquires computation results of the quantum computation units of a plurality of the modules and performs statistical averaging on the plurality of acquired computation results.

2. The quantum computer according to claim 1,
   wherein the plurality of qubits are silicon qubits.

3. The quantum computer according to claim 2, further comprising:
   a control unit that controls the selection unit to cause the quantum computation units of the plurality of modules to perform parallel computations.

4. The quantum computer according to claim 3,
   wherein, in the module, the quantum computation unit is configured to include a qubit subarray,
   the selection unit includes an X-direction selection circuit that performs selection in an X direction of the qubit subarray and a Y-direction selection circuit that performs selection in a Y direction of the qubit subarray,
   the selection unit further includes an output selection circuit for selecting an output of the qubit subarray,
   the plurality of modules are mounted in a parallel computation module, and
   in each of the plurality of modules, the qubit subarray, the X-direction selection circuit, the Y-direction selection circuit, and the output selection circuit are configured in the same layout.

5. The quantum computer according to claim 4, further comprising:
   a classical computer that performs a classical averaging process for obtaining a solution by collecting a plurality of outputs of each of the plurality of qubit subarrays and performing statistical processing.

6. The quantum computer according to claim 4,
   wherein the control unit controls the selection units of the plurality of modules mounted in the parallel computation module to cause the quantum computation units of the plurality of modules to perform parallel computations at the same time.

7. The quantum computer according to claim 5,
   wherein the classical computer performs statistical processing to reduce an influence of erroneous detection of the read circuit.

8. The quantum computer according to claim 5,
   wherein the read circuit amplifies computation results of the plurality of qubit subarrays to obtain digital signals, and the classical computer performs classical statistical processing using the digital signals that are output results from the plurality of subarrays.

9. A computation method of a quantum computer, comprising:

   acquiring parallel computation results from quantum computation units having a plurality of silicon qubits; and
   performing statistical averaging on a plurality of acquired computation results.

10. The computation method of a quantum computer according to claim 9,
    wherein each of the quantum computation units is configured to include a qubit subarray,
    the quantum computation units and a selection circuit, which acquires parallel computation results from the quantum computation units, are provided in a module,
    the selection circuit includes an X-direction selection circuit that performs selection in an X direction of the qubit subarray and a Y-direction selection circuit that performs selection in a Y direction of the qubit subarray,
    the selection unit further includes an output selection circuit for selecting an output of the qubit subarray,
    a plurality of the modules are mounted in a parallel computation module,
    in each of the modules, the qubit subarray, the X-direction selection circuit, the Y-direction selection circuit, and the output selection circuit are configured in the same layout, and
    the selection circuit causes the quantum computation units of the plurality of modules to perform parallel computations.

11. The computation method of a quantum computer according to claim 10, further comprising:

performing a classical averaging process for obtaining a solution by collecting a plurality of quantum computation results of the quantum computation units and performing statistical processing.

FIG. 1

EP 3 896 623 A1

FIG. 2

## FIG. 3

| SYMBOL | DESCRIPTION | REMARKS |
|---|---|---|
| | FIRST GATE MOSFET (FG MOSFET)<br><br>CONTROL GATE FOR INTERACTION BETWEEN QUBITS | |
| | SECOND GATE MOSFET (SG MOSFET)<br><br>QUANTUM DOT CONTROL GATE | |
| | THIRD GATE MOSFET (TG MOSFET)<br><br>QUBIT CONTROL GATE | |
| | FOURTH GATE MOSFET (HG MOSFET)<br><br>CONTROL GATE FOR INTERACTION BETWEEN QUBITS | |

EP 3 896 623 A1

FIG. 4

EP 3 896 623 A1

FIG. 5

## FIG. 6

FIG. 7

FIG. 8

FIG. 9A

FIG. 9B

FIG. 9C

# FIG. 9D

EP 3 896 623 A1

FIG. 1 0

# FIG. 1 1

| SYMBOL | OPERATION | |
|---|---|---|
| | WHEN THERE IS ONE ELECTRON IN NEAREST QUANTUM DOT | WHEN THERE ARE TWO ELECTRONS IN NEAREST QUANTUM DOT |

EP 3 896 623 A1

# FIG. 1 2

EP 3 896 623 A1

# FIG. 1 3

FIG. 14

QBLMS#0, QBLMS#1, QBLMS#2, QBLMS#3

QBLMSC #1, QBLMSC #0, QBLM

QBOM #0 through QBOM #31

QBLMSC #2, QBLMSC #3, QBLMC

EP 3 896 623 A1

FIG. 1 5

EP 3 896 623 A1

FIG. 16

EP 3 896 623 A1

# FIG. 17

77 K → CRYOGENIC CIRCUIT LSI CHIP 2

4.2 K → CRYOGENIC CIRCUIT LSI CHIP 1

10~100 mK → QUBIT LSI CHIP

DILUTION REFRIGERATOR

SERVER APPARATUS

EP 3 896 623 A1

Europäisches
Patentamt

European
Patent Office

Office européen
des brevets

# EUROPEAN SEARCH REPORT

Application Number

EP 21 16 2760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI R ET AL: "A Crossbar Network for Silicon Quantum Dot Qubits", ARXIV.ORG, CORNELL UNIVERSITY LIBRARY, 201 OLIN LIBRARY CORNELL UNIVERSITY ITHACA, NY 14853, 10 November 2017 (2017-11-10), XP081404235, DOI: 10.1126/SCIADV.AAR3960 * the whole document * | 1-11 | INV. G06N10/00 |
| A | TIMOTHY J DYSART ET AL: "Reliability Impact of N-Modular Redundancy in QCA", IEEE TRANSACTIONS ON NANOTECHNOLOGY, IEEE SERVICE CENTER, PISCATAWAY, NJ, US, vol. 10, no. 5, 1 September 2011 (2011-09-01), pages 1015-1022, XP011359210, ISSN: 1536-125X, DOI: 10.1109/TNANO.2010.2099131 * the whole document * | 1-11 | |
| A | PALER ALEXANDRU ET AL: "An introduction into fault-tolerant quantum computing", PROCEEDINGS OF THE 34TH ACM SIGMOD-SIGACT-SIGAI SYMPOSIUM ON PRINCIPLES OF DATABASE SYSTEMS, ACMPUB27, NEW YORK, NY, USA, 7 June 2015 (2015-06-07), pages 1-6, XP058511192, DOI: 10.1145/2744769.2747911 ISBN: 978-1-4503-3550-8 * the whole document * | 1-11 | TECHNICAL FIELDS SEARCHED (IPC) G06N |

The present search report has been drawn up for all claims

| Place of search | Date of completion of the search | Examiner |
|---|---|---|
| The Hague | 11 August 2021 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Non-patent literature cited in the description**

- **FRANK ARUTE et al.** Quantum supremacy using a programmable superconducting processor. *Nature,* October 2019, vol. 574 (24), 505-510

- **MORELLO, A. ; PLA, J. ; ZWANENBURG, F. et al.** Single-shot readout of an electron spin in silicon. *Nature,* 2010, vol. 467, 687-691